# EUROPEAN PATENT SPECIFICATION

(11) **EP 0 309 551 B1**
(45) Date of publication and mention of the grant of the patent: **19.05.1993**
(21) Application number: 88903703.2
(22) Date of filing: 31.03.1988
(51) Int. Cl.: A01C 1/00

(54) **SOLID MATRIX PRIMING WITH MICROORGANISMS AND CHEMICALS**
FESTER GRUNDIERUNGSNÄHRBODEN MIT MIKROORGANISMEN UND CHEMIKALIEN
ACTIVATION SUR MATRICE SOLIDE AVEC DES MICRO-ORGANISMES ET DES PRODUITS CHIMIQUES

(30) Priority: 03.04.1987 US 34812; 03.04.1987 US 34813; 30.03.1988 US 175934
(43) Date of publication of application: 05.04.1989
(73) Proprietor: Kamterter Products, Inc., Lincoln, Nebraska 68503 (US)
(72) Inventor: Eastin, John Alvin, Lincoln, Nebraska 68506 (US)
(74) Representative: UEXKÜLL & STOLBERG
(86) International application number: US8801099
(87) International publication number: WO8807318

(56) References cited:
- FR-A- 2 560 744
- GB-A- 849 210
- US-A- 3 521 402
- US-A- 4 116 666
- US-A- 4 678 669
- HORTSCIENCE Volume 21, Number 5, issued October 1986 (American Society for Horticultural Science, 914 Main Street, St. Joseph, Michigan 49085 USA), K: BRADFORD "Manipulation of Seed Water Relations Via Osmotic Priming to Improve Germination under Stress Conditions" pages 1105-1112
- JOURNAL OF AMERICAN SOCIETY FOR HORTICULTURAL SCIENCE; Volume 109, Number 5, issued September 1984 (American Society for Horticultural Science, 914 Main Street, St. Joseph, Michigan, 49085 USA)M. BENNETT ET AL. "Influence of Seed Moisture of Lima Bean Stand Establishment and Growth" pages 623-626

## Description

### BACKGROUND OF THE INVENTION

Seed priming or osmoconditioning are terms to describe a pre-sowing hydration treatment developed to improve seedling establishment (Heydecker and Coolbear, 1977, Seed Science and Technology 5:353-425), (Khan, et al., 1980/81, Israel J. Bot. 29:133-144) and (Bradford, 1986, HortScience 21:1105-1112). The general procedure is described as follows: Seeds are placed in an aerated osmotic solution of known psi (water potential). Different osmoticums have been used to achieve the solution psi for priming including high molecular weight (MW of 6000-8000) polyethylene glycol (PEG) and/or inorganic salts (Heydecker and Coolbear, 1977, supra). The osmotic solutions induce a water stress which prevents the completion of germination (radicle emergence). Seeds are, however, able to imbibe and complete the early phases of germination under controlled conditions. The duration of the priming treatment has been reported to be from less than 24 hours (Guedes and Cantliffe, 1980, J. Amer. Soc. Hort. Sci. 105:777-781) to several weeks (Khan, et al., 1980/81, supra) and is dependant on species, cultivar and even seedlot. Seeds are then removed from the solutions, rinsed and then dried back. After priming, seeds can be sown with existing planters. Results obtained from priming different crop seeds have been reviewed by Bradford, 1986, supra. In general, seedling emergence of primed seeds is earlier and more sychronous than dry sown seeds. Improvements in plant growth and yield characteristics have also been documented.

Several technical and logistical difficulties have been encountered with priming. Osmotic solutions require continuous aeration and in general, a large volume of priming solution is required per quantity of seeds. Reductions in percentage seedling emergence have been reported with the use of inorganic salts (Brocklehurst and Dearman, 1984, Ann. Applied Biol. 102:585-593). A relatively high concentration of PEG in solution is viscous and has low oxygen solutibility and diffusivity (Mexal, et al., 1975, Plant Physiol. 55:20-24).

An alternative to the use of solutions is to prime seeds in a solid medium. A solid material should have a high water holding capacity and allow seeds to imbibe. Peterson (1976, Sci. Hort. 5:207-214) described a procedure to prime onion seeds in a slurry of PEG 6000 and vermiculite. A ratio of three to four parts vermiculite moistened with PEG solution were mixed with 1 part seed. Although this technique overcame the need for aeration, he reported that the seeds were difficult to separate from the vermiculite. Methods have been described to increase the seed moisture content of large-seeded vegetables prior to sowing (Bennett and Waters, 1984, J. Amer. Soc. Hort. Sci. 109:623-626 and 1987, J. Amer. Soc. Hort. Sci., 112:45-49). Seed moisture content of lima beans (Phaseolus lunatus) and sweet corn (Zea Mays) was increased by combining seed, vermiculite and a known amount of water in a closed container. This mixture was incubated and then the vermiculite sieved away prior to sowing. Seedling establishment was improved by the pre-sowing treatments for both crops.

In accordance with the invention, a method of osmoconditioning seeds comprises the steps of mixing seeds with a seed osmoconditioning amount of water at a water potential between about -0.5 to about - 2.0 megapascals at equilibrium with said seeds, for a time and at a temperature sufficient to cause the seeds to imbibe sufficient water to enhance resultant plant vigor but insufficient to cause seed sprouting in said mixture. This method is characterized in that the mixing is with aeration and a particulate solid matrix material that controls the level of water potential; said particulate solid matrix material being nonpathogenic to the seeds and friable enough to permit its mechanical separation from the treated seeds. Advantageously, beneficial microorganisms or biocontrol agents or fungicide may be added to the particulate solid material. Preferably, the particulate solid matrix material that is mixed with the seeds has a bulk density above 0.3 grams per cubic centimeter.

The method uses an osmoconditioning composition adapted to osmocondition seeds that includes a seed osmoconditioning amount of water, with the mixture having a water potential sufficient to cause a desired predetermined seed, when contacted with said composition, to imbibe sufficient water to enhance resultant plant vigor but insufficient to cause seed sprouting. It is characterized in that the composition includes a particulate solid matrix material that is nonpathogenic to seeds, holds water and allows gas exchange. Advantageously, the composition is further characterized by beneficial microorganisms or a biocontrol agent or a fungicide and the particulate solid matrix material has a bulk density above 0.3 grams per cubic centimeter.

More specifically this invention relates to the priming of seeds using a solid phase matrix, rather than using aqueous solutions. The matrix comprises finely divided non plant pathogenic, water holding solid, for example a carbonaceous, preferably a lignateous solid which has a large equilibrium water potential psi and preferably has an osmotic potential component which is at least and about 90% and preferably greater than 95% of the total water potential. Examples of such materials include coal, especially soft coal, lignateous shales such as the leonardite shale, sold as Agro-Lig®, and sphagnum moss.

The matrix material when containing the water necessary to prime the seeds in question must still be sufficiently friable, nonclumping etc. so that, when desired, it can be mechanically separated from the treated seeds after treatment without damage to the seeds. The particle size of the matrix material is not unduly critical, but for mechanical reasons should be smaller than the seed being treated usually less than 20 mesh, but preferably substantially smaller. Typically, a material less than about 60 mesh is preferred; for example the Agro-Lig described hereinafter was 90% /wt less than 200 mesh, the soft coal was less than 60 mesh.

Particularly useful materials for the matrix are coal related materials, clay, vermiculite, sawdust, perlite, peat/moss, corn cobs and grain dust. To achieve a practical cost-effective system using an inorganic particulate matter as the matrix, the bulk density of a matrix of that inorganic particulate matter is preferably above 0.3 grams per cubic centimeter. In this specification, bulk density means the weight of a given volume of particulate material divided by its volume.

In the process of the invention the seed to be treated, a predetermined amount of solid matrix material and a predetermined amount of water are admixed and the mixture allowed to stand, preferably in a container which allows entry of air but which reduces evaporative losses, for example, a closed metal container with a small top opening, for a time and at a temperature sufficient to allow the seeds to imbibe water from the matrix and come to a water content equilibrium sufficient to enhance resultant plant vigor, i.e., enhance emergence, growth or yield characteristics, but short of that which would cause the seed to sprout.

As in solution priming, the equilibrium amount of water for the system to prime the seed is dependent on the specific seed variety, its state or condition, and the water potential psi of the medium, here the solid matrix material. Typically the solid matrix material should have a water potential psi between about -0.5 to about -2.0 megapascals at equilibrium with the seeds. The seed priming art to some extent is still empirical, and while typical water amounts and media water potentials for a given seed type are already generally known from the solution priming art, it is frequently best to test a small seed sample over a readily determined range of water potentials and temperatures to determine what conditions of temperature, water potential and time cause maximum imbibing of water by the seed, short of sprouting of the seed.

In the preferred process of the invention, a known weight of seed is wet with about 25% by weight of water. The total water utilized is typically in the order of about 1 liter per kilogram of seed but varies with seed size and seed condition. The wetted seed in turn, is mixed with the dry, flowable, particulate solid matrix material, coating the wet seeds with the particulate matrix material. The remainder of the predetermined amount of water for osmoconditioning is then admixed with the coated seeds and the mixture held at a predetermined temperature, usually between about 10 C for a time sufficient to allow the seeds to reach a desired moisture content equilibrium, usually one to about fourteen days.

When fungal or bacterial biocontrol agents are added to the solid matrix priming compositions, they function in a significantly improved manner than when used alone. It is presently believed that in the system of the invention, the biological control agents themselves proliferate during the solid matrix priming and thus they are either more active or have more effectively colonized the seed coat surface or in some cases enter the seed prior to planting. It is believed that because of preemptive colonization systemic protection is obtained, post emergence damping-off is reduced, and more rapid emergence and rapid growth occurs.

The biocontrol agent can be virtually any fungus or bacterium which demonstrates control of soilborne pathogens such as Pythium spp., or parasites or which provide stimulating effects such as increased plant growth vigor. They can be applied to the seed as a seed coating in a known fashion prior to the solid matrix priming step. Good prospects for use are certain strains of Trichoderma spp. and certain isolates of Enterobacter cloacae. Marked strains have enhanced utility since they can be more readily identified from soil samples, thus allowing users to study the present viability and numbers of the biocontrol agent after it has been utilized.

Typically, these biocontrol strains and isolates can be inoculated onto the seed in any manner known in the art, but are usually applied as a suspension in water or saline or powder or granule or buffer or broth, although they can be applied by prior colonization on the solid matrix material in sufficient numbers so that when contacted with the seed, sufficient numbers of biocontrol agent establish themselves upon and coat the seed. The biocontrol agent is typically added to the water used to wet the seed in the osmoconditioning process, as described above.

Chemical characteristics such as nutrients and the pH of the osmoconditioning mixture, and more particularly the pH on the surface of the seed coat, affect the growth and proliferation of the biocontrol agent since most biological systems function most efficiently over a given finite pH range. In a preferred embodiment of the conjoint, use of osmoconditioning and biocontrol agents, either the seed is preadjusted and/or the biosphere adjusted after the seed is placed in the matrix to render the biosphere more hospitable to a predetermined biocontrol agent. The seed coat surface pH adjustment technique has broad applicability to inoculating biocontrol agents onto the surface of seeds, but especially large volume, agronomically important seeds such as corn, soybean, wheat, cotton and others which must be very cost effectively treated because of the numbers of seeds being treated. The process can also be used with other seed including those previously enumerated.

The seeds that can be treated can be virtually any seed, including most vegetable crops, ornamentals and agronomic crops. Included are cucumber, lettuce, carrot, onion, melons, sweet corn, tomatoes, eggplant, peppers, bean radish, squash, pea, flower seeds, alfafa, and soybean.

The solid matrix priming compositions described above can also advantageously contain prescribed amounts of known seed fungicides such as thiram, captan, metalaxyl, pentachloronitrobenzene, and fenaminosulf, so that the finished primed seed is coated with the desired amount of fungicide, as is known to those skilled in the art. It may also include microorganisms useful to the crop such as useful in crop protection or establishment. For such purposes, some significant bacteria are: Bacillus subtilis, Pseudomonas, Rhizobia and Serratia and some significant fungi are Trichoderma, Gliocladium and Laetisaria. Likewise, the seeds can be treated with insecticides, pesticides or bactericides prior to or after the solid matrix priming.

In this specification, solid matrix priming is considered the process whereby seeds are intimately mixed with particulate solid phase media in the presence of sufficient water to realize a moisture content in the seed which allows for germination processes to occur but which prevents radicle emergence. During priming and especially during solid state priming, the addition of chemical additives and microorganisms is especially beneficial. In this specification, the language "added beneficial microorganisms" a means a microorganism that is added to the composition at a level in excess of that naturally occurring on the seed germ being primed.

### Example

### Seed-Solid Matrix - H₂O

Preliminary studies were conducted to determine the ratio of seed to solid matrix to water for effective solid matrix priming (SMP). The goal was to achieve a seed moisture content that would just prevent radicle emergence for a particular crop. This optimal ratio was determined on an empirical basis by mixing seed and solid matrix on a weight to weight basis. The water was calculated as a percentage of the solid matrix by weight. The seed, solid matrix and water were mixed and incubated at 15 C in a closed container with a small hole in the lid for ventilation. Results are shown for different crops in Table 1.

### Moisture contents and water relations of humates and seeds

Seeds of the five crops were primed in Agro-Lig as described in Table 1. Seeds were separated from the Agro-Lig by shaking through appropriate sized sieves. At the end of the priming treatment, the percent moisture content of the seeds in Agro-Lig was determined gravimetrically. The matrix potential (psi m) of Agro-Lig was determined as described by Black (Ed.), 1965, "Methods of Soil Analysis" Acedemic Press, NY, NY. The osmotic potential (psi s) of the Agro-Lig was determined by the following procedure. Four parts distilled water was added to one part Agro-Lig (wt/wt), samples from each crop to produce an extract (Greweling and Peech, 1960, N.Y. Agri. Expt. Station Bul. 960). The liquid phase was filtered and the psi s of the

**Table 1**

| The optimal ratio of seed-solid matrix-water for effective priming of different vegetable at 15 C. | | | | | |
|---|---|---|---|---|---|
| Crop | PARTS BY WEIGHT | | | | |
| | Solid Matrix | Seed | Solid Matrix | %(z) Water | Duration (day) |
| Tomato | Agro-Lig(1) | 1.0 | 1.5 | 95 | 6 |
| | Soft coal(2) | 1.0 | 1.5 | 95 | 6 |
| | Sphagnum moss | 1.0 | 1.5 | 90 | 6 |
| Carrot | Agro-Lig | 1.0 | 1.5 | 90 | 6 |
| Onion | Agro-Lig | 1.0 | 2.0 | 80 | 6 |
| Lettuce | Agro-Lig | 1.0 | 2.0 | 85 | 1 |
| Cucumber | Agro-Lig | 1.0 | 1.5 | 60 | 6 |

| | | | | | |
|---|---|---|---|---|---|
| (z) Percentage water based on dry weight of solid matrix | | | | | |
| (1) total % organic 84%, less than 1% nitrogen | | | | | |
| (2) total % organic 90%, less than 1% nitrogen | | | | | |

Agro-Lig solution extract was determined with a Microsmette model 5004 (Precision Systems Inc., Natick, Ma.). The psi s of Agro-Lig without seeds was also calculated to quantify the influence of seed leakage on the psi s of the medium. The total water potential of the Agro-Lig was determined for each crop after SMP with a HR-33 dewpoint microvolt meter and C-52 sample chamber (Wescor Inc., Logan, UT). Thus the total water potential calculated from its component fractions, psi m and psi s could be compared with the psi measured by thermocouple psychrometry. There were four replications per treatment for each study.

### Seedling emergence studies

The influence of solid matrix priming (SMP) and other conventional seed priming treatments was studied on seedling emergence and plant growth in growth chamber studies. SMP of tomato (Lycopersicon esculentum) 'New Yorker' was conducted with Agro-Lig, soft coal and sphagnum moss (Table 1). Other priming treatments included: -1.0 MPa PEG 8000 (Coolbear, et al., 1980, Seed Sci. and Technology 8:289-303) and 1.0% KNO₃ and 1.5% K₃PO₄ (Ells, 1963, Proc. Amer. Soc. Hort. Sci. 83:684-687). SMP of carrot (Daucus carota) 'Danvers 126' was conducted with Agro-Lig (Table 1). Other priming treatments included: 25% PEG 8000 (Szafirowska, et al., 1981, Agron. J. 73:845-848) and 0.2m KNO₃ + 0.1m K₃PO₄ (Haigh, et al., 1986, J. Amer. Soc. Hort. Sci. 111:660-665). SMP of onion (Allium cepa) 'Downing Yellow Globe' was performed with Agro-Lig (Table 1). Other priming treatments included: 34.2% PEG 8000 (Brocklehurst and Dearman, 1983, supra) and 0.2m KNO₃ + 0.1m K₃PO₄ (Haigh, et al., 1986, supra).

All priming treatments were performed at 15 C for 6 days which, in many cases, is a modification of the original procedure described in the literature. All priming treatments were prepared with 0.2% (wt/v) thiram (Gustafson, Inc., Dallas, TX) as a fungicide.

Seeds were rinsed and blotted dry after priming. Seeds were sown in flats filled with an artificial (peat-vermiculite) soil media. There were four replications of 50 seeds per rep in a randomized complete block design. Flats were maintained in growth chambers with 20 C day and 10 C night with a 12 hour photoperiod. Seedling emergence was recorded daily and the plant dry weight was determined at the termination of the emergence period.

### Thermodormancy

Alleviation of thermodormancy by priming was studied in lettuce (Lactuca sativa) 'Montello'. SMP of lettuce was performed with Agro-Lig (Table 1). Conventional priming treatments included: -1.5MPa PEG 8000 (Bradford, 1986, supra) and 1.0% K₃PO₄ (Cantliffe, et al., 1984, Plant Physiol. 75:290-294). After priming, seeds were rinsed and allowed to dry. Seeds were placed to germinate on moistened blotters in closed containers. The containers were maintained at a constant 35 C in the dark. There were four replications of 50 seeds each and the percent germination was determined after 10 days.

### SUMMARY

### Seed-Solid Matrix - H₂O

The solid matrix served as a reservoir for water and 1.5 to 2.0 parts of solid matrix were required per part of seed to allow effective priming (Table 1). The percentage of water added varied with crop and ranged from 60 to 95%. Despite the high initial water content of the mixture, the solid matrix remained friable and did not lose its structure.

### Moisture contents and water relations

Seeds of all crops were able to imbibe water from the Agro-Lig since a reduction in the Agro-Lig moisture content was measured after SMP (Table 1 and 2). At equilibrium all crops except for cucumber had a percent moisture content that the Agro-Lig (Table 2). The threshold seed moisture content for priming varied with crop and ranged from 42 to 24 percent (wet basis).

The components of the total water potential (psi) responsible for priming were determined. The psi of Agro-Lig is the sum of the psi s and psi m. The psi of the medium varied with crop and ranged from -1.34 MPa for SMP tomato to -1.77 MPa for SMP cucumber. The psi m contributed only a small fraction of the total psi and ranged from 3kPa for SMP tomato to 23kPa for SMP cucumber. The psi s due to the Agro-Lig alone was responsible for the largest portion of the psi, however, additional osmotic effects was attributed to solute leakage from seeds into the medium. Calculation of the

**Table 2**

| The percent moisture content of Agro-Lig and seeds after SMP. The total water potential of the Agro-Lig was determined by thermocouple pychrometry. | | | | |
|---|---|---|---|---|
| Crop | PERCENT MOISTURE CONTENT | | | |
| | Agro-Lig (dry basis) | Seed (dry basis) | Seed (wet basis) | Psi MPa |
| Tomato | 50 | 61 | 38 | -1.1 |
| Carrot | 42 | 67 | 40 | -1.2 |
| Onion | 38 | 73 | 42 | -1.4 |
| Lettuce | 42 | 72 | 42 | -1.4 |
| Cucumber | 35 | 32 | 24 | -1.9 |

Agro-Lig psi by its component parts overestimated (predicted a lower water potential than) the Agro-Lig, except in the case of the cucumber, as determined by thermocouple pychrometry (Table 2).

### Seedling emergence studies

Sowing tomato seeds from all priming treatments decreased the time to 50% seedling emergence (T50) and increased the plant dry weight compared to the non-primed control (Table 3). SMP with Agro-Lig and priming with PEG resulted in greater percent emergence, however, the PEG treatment had a higher T50 and less dry weight per plant compared to other priming treatments. From this study and other experiments (data not shown), Agro-Lig was chosen for the solid medium for the remainder of the studies.

Priming carrot seeds with inorganic salts resulted in lower percentage seedling emergence (Table 4). Faster seedling emergence (lower T50) was obtained from sowing SMP seeds with Agro-Lig. Sowing onion seeds after SMP with Agro-Lig decreased the T50 and increased the plant dry weight compared to all other treatments (Table 5).

**Table 3**

| The influence of seed priming treatments on tomato seedling emergence and growth. | | | |
|---|---|---|---|
| Treatment | Emergence % | T50 (days) | Dry wt. per plant (mg) |
| Nontreated | 87 b | 13.0 a | 4.25 c |
| Agro-Lig | 98 a | 9.1 c | 8.36 a |
| Soft coal | 95 ab | 9.6 c | 8.23 a |
| Sphagnum moss | 95 ab | 9.4 c | 8.02 a |
| -1.OMPa PEG | 98 a | 10.5 b | 7.02 b |
| 1.0% KNO₃ and 1.5% K₃PO₄ | 95 ab | 9.1 c | 8.16 a |
| LSD (5%) | | | |

**Table 4**

| The influence of seed priming treatments of carrot seedling emergence and growth. | | | |
|---|---|---|---|
| Treatment | Emergence % | T50 (days) | Dry wt. per plant (mg) |
| Nontreated | 88 a | 10.8 a | 1.38 c |
| Agro-Lig | 89 a | 7.7 c | 2.17 a |
| 25% PEG | 87 a | 8.5 b | 1.89 b |
| 0.2m KNO₃ +0.1m K₃PO₄ | 73 b | 8.1 b | 2.02 ab |
| LSD (5%) | | | |

**Table 5**

| The influence of seed priming treatments on onion seedling emergence and growth. | | | |
|---|---|---|---|
| Treatment | Emergence % | T50 (days) | Dry wt. per plant (mg) |
| Nontreated | 99 a | 11.0 a | 2.16 c |
| Agro-Lig | 98 ab | 6.c | 3.61 a |
| 34.2% PEG | 98 ab | 8.2 b | 2.93 b |
| 0.2m KNO₃ + 0.1m K₃PO₄ | 95 b | 7.8 b | 2.87 b |
| LSD (5%) | | | |

### Thermodormancy

The beneficial effects of SMP has already been shown by sowing crops into a cool soil environment. Short term priming treatments were also studied to alleviate thermodormancy in lettuce. Imbibing non-primed seeds at 35 C resulted in 1% germination (Table 6). Conventional priming treatments and SMP with Agro-Lig were able to alleviate thermodormancy.

The attainment of a threshold seed water content is most important for seed priming (Table 2). The psi of the medium is indirectly related to the seed moisture content (r=0.75). Bradford (1986, supra) primed lettuce seeds for 24 hours in -1.5 MPa PEG. The seed moisture content was ca 70% which is in close agreement with our data (Table 2). Similar data has been reported for carrot; seeds were incubated in -1.0 and -1.5 MPa PEG solution for 6 days which resulted in seed moisture contents of 76 and 68% respectively (Hegarty, 1977, New Phytol. 78: 349-359).

Results from the water potential components of Agro-Lig are very interesting. One would immediately expect that the major component responsible for psi was psi m which is attributed to the fact that Agro-Lig is similar to an organic

**Table 6**

| The influence of seed priming treatments on lettuce permination at 35 C. | | |
|---|---|---|
| Treatment | Treatment duration hours | Percent germination |
| Nontreated | - | 1 b |
| Agro-Lig | 24 | 75 a |
| -1.5 MPa PEG | 24 | 71 a |
| 1.0% K₃PO₄ | 20 | 71 a |
| LSD (5%) | | |

soil. However, psi m could account for less than 1.5% of the total. The major portion of psi is psi s which is attributed to the Agro-Lig composition. Analysis of the Agro-Lig has revealed the presence of 10.2 x 10³, 1.84 x 10 ³ and 1.187 x 10³ ug of calcium, magnesium and sodium, respectively per g of material.

Solute leakage from all seed kinds were found to contribute to the psi s. In a separate study, tomato seeds were leached for 6 hours and then dried back to the original moisture content. SMP of these previously soaked seeds resulted in radicle emergence. Thus, the osmotic effect of solute leakage from seeds during SMP does contribute to the psi of the medium.

Determination of the optimal ratio of seed-solid matrix-water was performed on a empirical basis. It must be understood in this system that, unlike priming with solutions, there is not a large portion of solid matrix to seed. Thus as seeds imbibe and leak solutes the psi of the medium changes. At present, it would appear that a simple screening procedure could be used to obtain the optimal ratio for SMP of a particular seedlot. There are several factors that influence this ratio. Seed characteristics include: threshold seed moisture content, affinity for water and the solute leakage. Agro-Lig characteristics include: innate chemical composition which influence the psi s, the water holding capacity and water retention characteristics.

Seedling emergence and germination tests were conducted to evaluate the promotive effects of the pre-sowing treatments. Conventional priming treatments with PEG in inorganic salts were selected from the literature. Treatment comparisons with liquid priming treatments could better test the effectiveness of SMP. SMP with Agro-Lig was statistically equal to or better than conventional priming treatments for improving seedling emergence, decreasing T50 and increasing plant dry weight (Table 3, 4 and 5). Thermodormancy was shown to be alleviated with either SMP or liquid priming treatments (Table 6).

It is not fully understood why SMP is superior to conventional liquid priming treatments, however it is believed to be due to: (1) better aeration; (2) less phytotoxicity; and (3) the availability of growth promoting substances in the Agro-Lig. Humic acid is a naturally occurring plant growth regulator extracted from Agro-Lig (American Colloid Co.). Humic acid has been shown to stimulate seed germination and seedling growth in carrot (Ricotta and Sanders, J. Am. Soc. Hort. Sci. in press). Seedling root and shoot growth has been promoted with humic acid in wheat (Triticum aestivum) (Malic and Azam, 1985, Environ. and Exp. Bot. 25:245-252).

Similarly, it is not fully understood why synergistic results are achieved from the use of added microbes and channels during priming but such results are shown by tests, the results of which are provided in Tables 7 and 8.

**Table 7**

| Effect of Serratia proteamaculans Strain 1-102, solid matrix priming and chemical seed treatment on Canola seedling emergence in Pythium infested soil. | | | | | | | |
|---|---|---|---|---|---|---|---|
| | Days After Planting % Emergence | | | | | | |
| Treatment | 1 | 2 | 3 | 4 | 5 | 6 | 7 |
| Untreated | 0 | 0 | 0 | 4 | 17 | 18 | 20 |
| SMP | 0 | 0 | 0 | 3 | 10 | 13 | 15 |
| Vitavax | 0 | 0 | 0 | 10 | 42 | 58 | 64 |
| 1-102 | 0 | 0 | 0 | 8 | 38 | 52 | 60 |
| SMP + 1-102 AP | 0 | 0 | 0 | 21 | 50 | 62 | 67 |
| SMP + 1-102 DP | 0 | 0 | 0 | 26 | 63 | 82 | 82 |
| SMP = solid matrix priming in calcined clay and pH 6.8 phosphate buffer. SMP + 1-102 AP = strain 1-102 added to the seeds after SMP. SMP + 1-102 DP = strain 1-102 added during priming which was for a 3 day period. | | | | | | | |

**Table 8**

| Effect of Serratia proteamaculans Strain 1-102, solid matrix priming and chemical seed treatment on Cucumber seedling emergence in Pythium infested soil. | | | | | | | |
|---|---|---|---|---|---|---|---|
| | Days After Planting % Emergence | | | | | | |
| Treatment | 1 | 2 | 3 | 4 | 5 | 6 | 7 |
| Untreated | 0 | 0 | 0 | 0 | 0 | 0 | |
| SMP | 0 | 1 | 10 | 20 | 23 | 22 | |
| 1-102 | 0 | 0 | 1 | 2 | 8 | 8 | |
| SMP + 1-102 AP | 0 | 3 | 15 | 50 | 48 | 43 | |
| SMP + 1-102 DP | 2 | 8 | 58 | 79 | 80 | 80 | |
| SMP = Solid matrix priming in calcined clay and pH 6.8 phospate buffer. SMP + 1-102 AP = strain 1-102 added to the seeds after SMP SMP + 1-102 DP = strain 1-102 added during priming | | | | | | | |

The data in Table 7 demonstrate synergism with regard to solid matrex priming and the utility of the technique in eliciting beneficial stand establishment effects when used with beneficial microorganisms in addition to the effect of either treatment alone. Other tests show that the systemic fungicides Apron and Vitavax act synergistically when added to the solid matrix priming system as well.

The data in Table 8 demonstrate that beneficial microorganisms act synergistically with solid matrix priming in conferring stand establishment benefits. Seedling carried further show superior resistance to damping off when treated with 1-102 in the solid matrix priming system. The differential of 30 to 40% increase in emergence due to treatment during priming has been found to be consistent. Similar data with beneficial pseudomonas and corynebacteria over a range of crops have been obtained.

## Claims

1. A method of osmoconditioning seeds which comprises the steps of mixing seeds with a seed osmoconditioning amount of water at a water potential between about -0.5 to about -2.0 megapascals at equilibrium with said seeds, for a time and at a temperature sufficient to cause the seeds to imbibe sufficient water to enhance resultant plant vigor but insufficient to cause seed sprouting in said mixture characterized in that the mixing is with aeration and a particulate solid matrix material that controls the level of water potential; said particulate solid matrix material being nonpathogenic to the seeds and friable enough to permit its mechanical separation from the treated seed.

2. The method of claim 1 further characterized by adding beneficial microorganisms or biocontrol agents or fungicide to the particulate solid material.

3. A method according to claims 1 or 2 in which the particulate solid matrix material that is mixed with the seeds has a bulk density above 0.3 grams per cubic centimeter.

4. An osmoconditioning composition adapted to osmocondition seeds which comprises a seed osmoconditioning amount of water, said mixture having a water potential sufficient to cause a desired predetermined seed, when contacted with said composition, to imbibe sufficient water to enhance resultant plant vigor but insufficient to cause seed sprouting characterized in that the composition includes a particulate solid matrix material that is nonpathogenic to seeds, holds water and allows gas exchange.

5. The composition of claim 4 further characterized by beneficial microorganisms or a biocontrol agent or a fungicide.

6. The composition of claims 4 or 5 further characterized in that the particulate solid matrix material has a bulk density above 0.3 grams per cubic centimeter.

## Patentansprüche

1. Verfahren zum osmotischen Konditionieren von Samen, welches die Schritte des Vermischens von Samen mit einer die Samen osmotisch konditionierenden Menge an Wasser bei einem Wasserpotential zwischen etwa -0,5 bis etwa -2,0 Megapascal bei Gleichgewicht mit den Samen für eine Zeitdauer und bei einer Temperatur umfaßt, die ausreichen, um die Samen zu veranlassen, genügend Wasser aufzunehmen, um die resultierende Pflanzenvitalität zu steigern, die aber nicht ausreichen, um die Samen in der Mischung keimen zu lassen, **dadurch gekennzeichnet**, daß das Mischen unter Luftzufuhr und mit einem partikelförmigen festen Matrixmaterial erfolgt, welches das Niveau des Wasserpotentials kontrolliert, wobei das partikelförmige feste Matrixmaterial für die Samen nicht pathogen ist und krümelig genug ist, um mechanisch von den behandelten Samen abtrennbar zu sein.

2. Verfahren nach Anspruch 1, **dadurch gekennzeichnet**, daß man dem partikelförmigen festen Material ferner nutzbringende Mikroorganismen oder biologisch kontrollierende Mittel oder Fungizide zusetzt.

3. Verfahren nach den Ansprüchen 1 oder 2, bei dem das partikelförmige Matrixmaterial, welches mit den Samen vermischt wird, eine Schüttdichte über 0,3 Gramm pro Kubikzentimeter aufweist.

4. Osmotisch konditionierende Zusammensetzung, welche für die osmotische Konditionierung von Samen zubereitet ist, und die eine Samen osmotisch kontrollierende Menge Wasser umfaßt, wobei die Mischung ein Wasserpotential aufweist, welches ausreicht, um einen gewünschten vorbestimmten Samen zu veranlassen, bei Kontakt mit der Zusammensetzung genügend Wasser aufzunehmen, um die resultierende Pflanzenvitalität zu steigern, die aber nicht ausreicht, um die Keimung des Samens zu verursachen, **dadurch gekennzeichnet**, daß die Zusammensetzung ein partikelförmiges festes Matrixmaterial einschließt, welches für Samen nicht pathogen ist, Wasser aufnimmt und Gasaustausch zuläßt.

5. Zusammensetzung nach Anspruch 4, ferner **gekennzeichnet** durch nutzbringende Mikroorganismen oder ein biologisch kontrollierendes Mittel oder ein Fungizid.

6. Zusammensetzung nach den Ansprüchen 4 oder 5, ferner **dadurch gekennzeichnet**, daß das partikelförmige feste Matrixmaterial eine Schüttdichte über 0,3 Gramm pro Kubikzentimeter aufweist.

## Revendications

1. Un procédé de conditionnement osmotique de semences qui comprend les étapes de mélange des semences avec une quantité d'eau assurant le conditionnement osmotique des semences à un potentiel hydrique entre environ -0,5 et environ -2,0 mégapascals à l'équilibre avec lesdites semences, pendant un temps et à une température suffisants pour que les semences s'imbibent suffisamment d'eau pour accroître la vigueur de la plante obtenue, mais insuffisants pour provoguer la germination des semences dans ledit mélange, caractérisé en ce que le mélange est effectué avec aération et avec une matrice solide particulaire qui ajuste la valeur du potentiel hydrique, ladite matrice solide particulaire étant non pathogène pour les semences et suffisamment friable pour permettre sa séparation mécanique d'avec les semences traitées.

2. Le procédé de la revendication 1, caractérisé de plus en ce que l'on ajoute des microorganismes bénéfiques ou des agents biorégulateurs ou un fongicide au solide particulaire.

3. Un procédé de la revendication 1 ou 2, dans lequel la matrice solide particulaire, qui est mélangée avec les semences, a une masse volumique apparente supérieure à 0,3 g/cm³.

4. Une composition de conditionnement osmotique adaptée au conditionnement osmotique des semences, qui comprend une quantité d'eau assurant le conditionnement osmotique des semences, ledit mélange ayant un potentiel hydrique suffisant pour qu'une semence prédéterminée désirée, lorsqu'elle est mise en contact avec ladite composition, s'imbibe suffisamment d'eau pour accroître la vigueur de la plante obtenue, mais insuffisant pour provoquer la germination de la semence, la composition étant caractérisée en ce qu'elle comprend une matrice solide particulaire qui est non pathogène pour les semences, retient l'eau et permet l'échange de gaz.

5. La composition de la revendication 4, caractérisée de plus en ce qu'elle contient des microorganismes bénéfiques ou un agent biorégulateur ou un fongicide.

6. La composition des revendications 4 ou 5, caractérisée de plus en ce que la matrice solide particulaire a une masse volumique apparente supérieure à 0,3 g/cm³.
